# EUROPEAN PATENT APPLICATION

(11) **EP 4 838 002 A2**
(43) Date of publication of application: **11.11.2026**
(21) Application number: 26175732.2
(22) Date of filing: 30.04.2026
(51) Int. Cl.: D03D 1/00, A01F 15/08, A01F 15/18, B32B 5/02, B65G 15/34, D02G 3/44, D03D 15/41, D03D 15/283, D03D 15/573

(54) **ENDLESS ELASTOMERIC BELT AND METHOD OF FORMING A BALER BELT**

(30) Priority: 08.05.2025 US 202519202580
(71) Applicant: ContiTech Deutschland GmbH, 30165 Hannover (DE)
(72) Inventor: Schlomski, Jens, 30175 Hannover (DE); Brown, Donald, Fairlawn, 44333 (US); Beyer, Mark, Fairlawn, 44333 (US); Cochran, Joseph A., Fairlawn, 44333 (US)
(74) Representative: Preusser, Andrea

(57) **Abstract**

The present invention relates to an endless elastomeric belt comprising a first elastomeric outer layer, a second elastomeric outer layer, and a polyester reinforcement layer positioned between the first and second elastomeric outer layers. The belt is designed to provide enhanced durability and strength for various applications requiring flexibility and resilience. The reinforcement layer ensures structural integrity and longevity, while the elastomeric outer layers offer protection and flexibility.

## Description

### FIELD

The field to which the disclosure relates is elastomeric belts.

### BACKGROUND

The subject matter relates generally to baler belts and baler belt reinforcements.

### BRIEF DESCRIPTION OF THE DRAWINGS

Fig. 1 is a system 100 in accordance with one or more embodiments.
Fig. 2 is a diagram illustrating various examples of suitable baler belts in accordance with one or more embodiments.
Fig. 3 is a cross sectional view of a baler belt 300 in accordance with one or more embodiments.
Fig. 4 shows a schematic perspective view of a belt system 400 in the form of a round baler 402 with two baler belts 102 in accordance with one or more embodiments.

### DETAILED DESCRIPTION

The following description of the variations is merely illustrative in nature and is in no way intended to limit the scope of the disclosure, its application, or uses. The description is presented herein solely for the purpose of illustrating the various embodiments of the disclosure and should not be construed as a limitation to the scope and applicability of the disclosure. In the summary of the disclosure and this detailed description, each numerical value should be read once as modified by the term "about" (unless already expressly so modified), and then read again as not so modified unless otherwise indicated in context. Also, in the summary of the disclosure and this detailed description, with the understanding that a value range listed or described as being useful, suitable, or the like, is intended that any and every value within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific data points, it is to be understood that inventors appreciate and understand that any and all data points within the range are to be considered to have been specified, and that inventors had possession of the entire range and all points within the range.

Unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of concepts according to the disclosure. This description should be read to include one or at least one, and the singular also includes the plural unless otherwise stated.

The terminology and phraseology used herein is for descriptive purposes and should not be construed as limiting in scope. Language such as "including", "comprising", "having", "containing", or "involving", and variations thereof, is intended to be broad and encompass the subject matter listed thereafter, equivalents, and additional subject matter not recited.

Also, as used herein, any references to "one embodiment" or "an embodiment" means that a particular element, feature, structure, or characteristic described in connection with the embodiment is included in at least one embodiment. The appearances of the phrase "in one embodiment" in various places in the specification are not necessarily referring to the same embodiment.

In agriculture, balers are used to press stalk-shaped crops into bales. For this purpose, the crop is conveyed into the baling chamber and pressed into a cylindrical bale by baler belts, the bale then being dispensed onto the field when it reaches a given size.

Such balers with variable baling chambers, also referred to as pressing chambers, are used in the agricultural sector, but are also suitable for round-baling any fibrous material, such as waste, film or fabric residues in the field of disposal engineering.

Baler belts typically have a linear or flat tension member embedded in an elastomer, which takes on the task of rotating the bale while simultaneously compressing the outer material layers on the rotating bale core.

The baler belts are generally used so that the belt or belts, by rotating in the baler by roller guidance sets previously fed into rotation (starting process) and in the continuously presses or press the material further fed via the pick-up cylinder of the pressing chamber onto the core, already rotating by the belt or belts, as a material layer.

Example pressing chambers generally have a width of approximately 1.2 m with usual belt lengths of approximately 10 m to approximately 15 m. Over this endless length, the same belt(s) are guided over a press-specific number of rollers or cylinders, the average number of which is twelve. The belt or belts runs or run usually at a speed of approximately 3 m/s.

One issue that occurs with baler belts is that they can stretch or loosen over time. This can be referred to as elongation or belt stretchiness and can occur under tension. If the belt elongates under tension beyond a threshold amount, a formed bale can disassemble and the like.

A technique to mitigate stretching or elongation of baler belts is needed.

One or more embodiments are shown that utilize a reinforcement to mitigate stretching or elongation of baler belts without requiring steel material as a reinforcement while also providing greater flexibility.

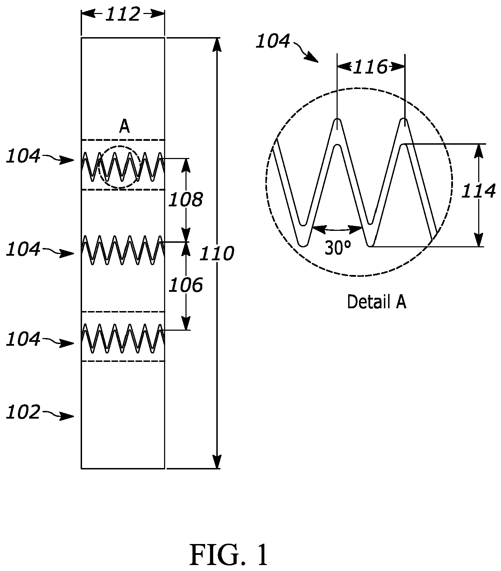

Fig. 1 is a diagram illustrating a baler belt 102 having a polyester reinforcement 304 in accordance with one or more embodiments. The system is provided for illustrative purposes and suitable variations are contemplated.

The baler belt 102 is typically an endless belt and comprises a belt carcass and the polyester reinforcement 304, which provides suitable properties for baler operations. These properties include low-elongation that permits high tensions without deforming or permanently elongating the baler belt 102. This permits the replacement of a belt in the baler belt set without putting undue extra load on the replacement belt which can impact its performance. This permits higher performance and a longer lifetime than other belts without this reinforcement. Additionally, the baler belt 102 can be produced at reduced cost without highly specialized equipment, when compared with other baler belt designs.

The polyester reinforcement 304 is present in a ply of one or more plies as a tension layer. The polyester reinforcement 304, in one example, has a plurality of cords arranged substantially in parallel and woven together with a plurality of weft yarns. The cords each comprise a plurality of plied yarns. Each plied yarn has a plurality of singles yarns. It is appreciated that yarn plies can be referred to as plied yarns.

The plies each comprise a polyester reinforcement having a plurality of cords arranged in parallel and woven together with a plurality of weft yarns to form a woven fabric.

The woven fabric has suitable characteristics, such as a warp strength of at least 450 Newtons per millimeter (N/mm), comprised of cords each having a twist per meter (tpm) of less than or equal to 200 tpm, and an end strength of at least 500 Newtons (N).

It is appreciated that cords having other suitable characteristics are contemplated that yield low elongation, such as when woven into a fabric, the fabric will have an elongation of less than 0.37 percent at 26 N/mm.

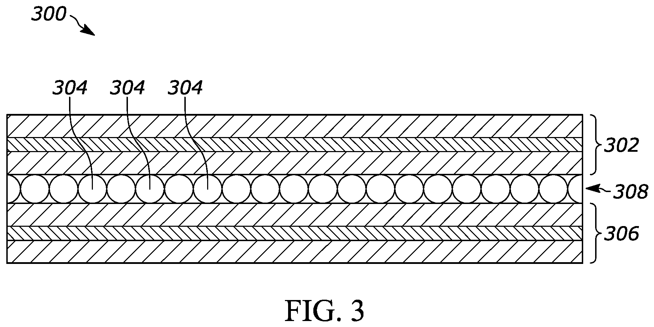

The polyester reinforcement 304 (shown in Fig. 3) is typically a plain woven cord fabric (like a tire cord fabric) comprising of warp yarns and weft yarns, composed of a plurality of warp yarns arranged in parallel and weft yarns arranged to prevent the warp yarns from being loosened. The warp yarns have relatively high density and act as strength members. It is appreciated that the distribution of the warp yarns over the fabric width is important. The weft yarns are only used to position warp cords and do not provide transverse strength.

The cords and/or yarns are woven into a fabric by a suitable technique, such as sequentially performing twisting, plying, cabling and weaving. The woven greige fabric is untreated and is dipped with RFL or RF-free adhesive coatings for adhesion to rubber, followed by calendering where a rubber compound is pressed into, on top of and on the bottom of the fabric, ensuring good penetration and bonding between the rubber and cords. Suitable properties include thickness of the ply, spacing between cords, the number of cords and the penetration of rubber into the composite sheet.

The fiber used for warp yarns has high tenacity and may be selected from a wide variety of available synthetic materials, including nylons, polyesters, aramids, and other high performance polymers, including hybrids, which are converted to a cabled cord. Suitable warp yarns are polyesters, including high modulus low shrink (HMLS) or HT types, and recycled polymer, which can be used for improved sustainability. The warp cords have alternating S and Z twists; the cord construction and twist levels are factors and affect properties of the fabric and belt. Weft yarns are highly extensible, typically consisting of nylon/cotton core spun yarns which are produced by wrapping air-jet or ring spun staple fibers such as cotton around a continuous filament nylon core, or as undrawn continuous nylon filaments.

The break elongation of extensible weft yarn is > 200% through weaving and > 100% after fabric RFL treating.

An example range of suitable twist levels of S and Z are from 60 tpm to 250 tpm in the ply and 60 tpm to 250 tpm in the cable and can be either balanced or unbalanced.

An example of a suitable linear density (thickness) of the warp yarns is between 6000 and 20000 dtex. The tensile strength of the warp yarn can vary and generally depends on the yarn type used. An example of a suitable lower limit of the tensile strength is 5 cN/dtex. An example of a suitable warp density is in the range of 40 to 90 ends/dm and a suitable weft density is in the range of 6 to 12 ends/dm.

The polyester reinforcement 202 includes increased hook holding capacity for attachment purposes and/or a repair or replacement belt section and mitigates costly repairs associated with replacing baler belts.

One or more hooks, or baler belt hooks, can be used to attach or secure the baler belt 102 to make a continuous length belt. The hooks facilitate tension and alignment of the belt 102 during the baling process.

Additionally, the baler belt 102 contributes to a circular economy and mitigates CO2 emissions.

The polyester reinforcement 304 can include polyethylene terephthalate (PET).

The polyester reinforcement 304 can include a percentage of recycled content, for example recycled polyethylene terephthalate (rPET). In one example, the percentage of recycled content is a range of 25% to 100%. It is appreciated that this range utilizes a suitable amount or recycled material while maintaining sufficient strength to mitigate elongation of the belt 102.

The rPET can be collected from a variety of sources including, but not limited to, packaging, bottles, containers, automotive interiors, automotive parts, upholstery, elastomeric belts, and the like. Such belts can be beyond end of life and the PET material can be extracted and repurposed as rPET.

In one example, rPET is obtained by collecting PET products, sorting the collected products, cleaning the sorted products, shredding the cleaned products into flakes or pellets and processing the flakes or pellets into a reinforcement material having rPET.

The rPET can result from recycling processes where flakes or pellets of recycled material are obtained, material is broken into chemical components are repolymerized and the like.

The rPET also has factors including purity of rPET. This factor can be controlled by cleaning or sorting to remove contaminants like adhesives, residues, and labels.

Using rPET with the reinforcement 304 can lower carbon emissions, mitigate generation of PET waste, use less energy to produce and the like.

The polyester reinforcement 304 is generally embedded in the belt carcass during a baler belt manufacturing process.

The baler belt 102 can be used in a variety of conveying applications including, but not limited to, mining, construction, aggregate manufacturing, grain handling, wood product processing, wood product manufacturing, road milling, agricultural belting for round baler belts, seed tenders, harvest headers (drapers), tube conveyors, snow groomers, and the like.

The belt has a suitable width 112 and length 110, such as a width range of 2-12 inches, however it is appreciated that other suitable dimensions are contemplated. The belt has a thickness, such as 0.25 inches to 0.50 inches, however it is appreciated other suitable dimensions are contemplated.

The belt 102 is a continuous or endless type belt and can have one or more splices 104 to attach one or more belt sections or segments together. The splices 104, in one example, comprise a zigzag pattern as shown with a height of 114, a stitch or width of 116 and an angle (e.g., 30 degrees).

It is appreciated that the angle of less than or equal to 30 degrees facilitates flex.

Other splicing techniques such as finger splices and bias splices are contemplated.

It is appreciated that suitable variations of the belt 102, splices 104 and the reinforcement 304 are contemplated.

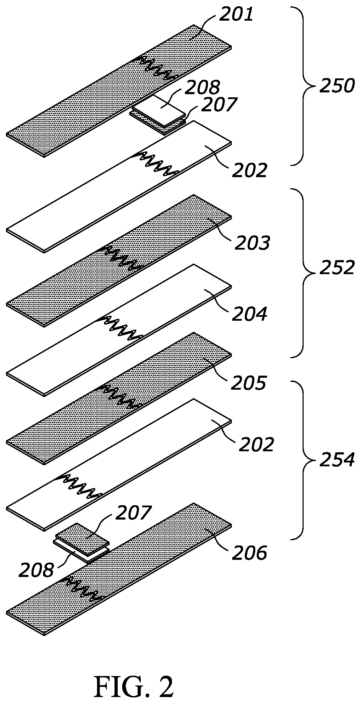

Fig. 2 is a diagram illustrating various examples of splicing offsets in accordance with one or more embodiments. It is appreciated that suitable variations are contemplated.

Layer 201 is an outer cover layer or top cover formed as an outer layer of the baler belt 102.

Layer 202 is a reinforcement layer comprising a fabric.

Layers 203 and 205 are skim layers comprised e.g., with rubber.

Layer 204 is a tension layer and can include the reinforcement 304 and the like.

Layer 206 is an inner cover or pulley cover layer.

Layers 207 and 208 are additional layers to protect the splice and help carry the belt load across the splice.

Various example splicing offsets are shown at 250, 252 and 254. The splicing is offset for one or more layers to mitigate thickness and facilitate strength.

Fig. 3 is a cross sectional view of a baler belt 300 in accordance with one or more embodiments. The belt is provided for illustrative purposes and it is appreciated suitable variations are contemplated.

The belt 300 can be used as the belt 102.

The belt 300 includes a tension layer 308 embedded between two elastomeric layers 302 and 306. The tension layer 308 has a polyester reinforcement 304. The tension layer 308 can have one or more plies each having the polyester reinforcement 304. At least the elastomeric layer 302 is formed from the exemplary elastomeric composition described above. The elastomeric layers 302, 306 may be the same composition or may be different, and the layers 302, 306 may have different constructions such as different thicknesses or material properties.

The tension layer 308 provides additional strength to the article 300 by applying strands of reinforcement to the article.

The tension layer 308 includes the polyester reinforcement 304, as described above. The polyester reinforcement 304 can comprise or include PET and/or rPET.

Other layers, such as reinforcement layers, can also be present in the belt 300.

It is appreciated that the belt 300 can incorporate a plurality of tension layers 308 in suitable variations.

It is appreciated that the belt 300 can be used as an elastomeric article. Examples of such elastomeric article(s) 300 with embedded reinforcement may include power transmission belts, conveyor belts, bellows such as for air springs, reinforced hoses, reinforced seals, gaskets, dampers, or the like.

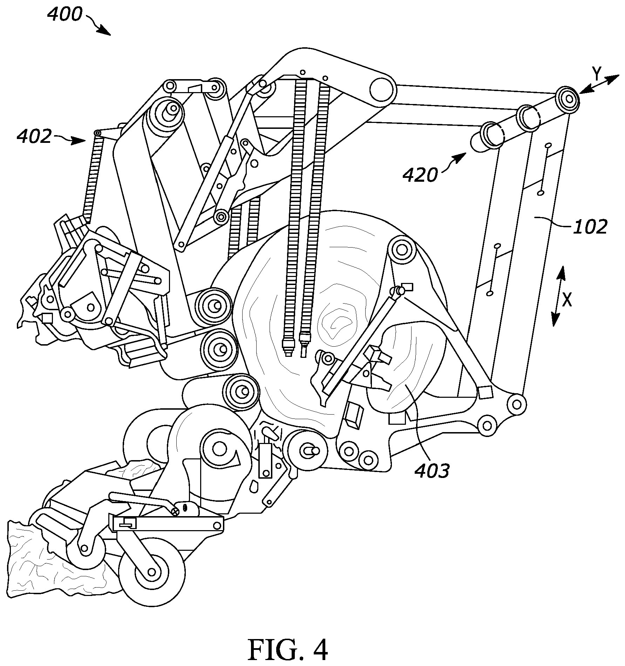

Fig. 4 shows a schematic perspective view of a belt system 400 in the form of a round baler 402 with baler belts 102 in accordance with one or more embodiments.

The belts 102 run parallel to each other within the round baler 402 and can jointly receive harvested material, such as hay, between them in order to press therefrom a round bale 403. For illustrative purposes, Fig. 4 shows 2 belts however it is appreciated that other suitable numbers of belts are contemplated, such as 4 or 5.

The belts 102 can wrap around one or more rollers 420 and can connect using laces or hooks, such as H shaped or U shaped laces.

The system includes one or more hook connections or hooks.

During operation, the enhanced flexibility and mitigated elongation due to the polyester reinforcement 304 of the belts 102 form the bale 403. The system 400 can wrap the bale 403 once it has been produced to a selected size.

The foregoing description of the embodiments has been provided for purposes of illustration and description. Example embodiments are provided so that this disclosure will be sufficiently thorough and will convey the scope to those who are skilled in the art. Numerous specific details are set forth such as examples of specific components, devices, and methods, to provide a thorough understanding of embodiments of the disclosure but are not intended to be exhaustive or to limit the disclosure. It will be appreciated that it is within the scope of the disclosure that individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Also, in some example embodiments, well-known processes, well-known device structures, and well-known technologies are not described in detail. Further, it will be readily apparent to those of skill in the art that in the design, manufacture, and operation of apparatus to achieve that described in the disclosure, variations in apparatus design, construction, condition, erosion of components, gaps between components may present, for example.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first", "second", and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner", "adjacent", "outer", "beneath", "below", "lower", "above", "upper", and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although a few embodiments of the disclosure have been described in detail above, those of ordinary skill in the art will readily appreciate that many modifications are possible without materially departing from the teachings of this disclosure. Accordingly, such modifications are intended to be included within the scope of this disclosure as defined in the claims.

## Claims

1. An endless elastomeric belt comprising:
a first elastomeric outer layer;
a second elastomeric outer layer;
a tension layer comprising one or more plies and located between the first elastomeric outer layer and the second elastomeric outer layer;
the plies each comprise a polyester reinforcement having a plurality of cords arranged in parallel and woven together with a plurality of weft yarns to form a woven fabric;
the cords each comprise a plurality of yarn plies, each yarn ply comprises a plurality of warp yarns; and
wherein the woven fabric has a warp strength of at least 450 Newtons per millimeter, comprised of cords each having an individual end strength of at least 500 Newtons (N),
a twist per meter (tpm) of less than or equal to 200 tpm.

2. The belt of claim 1, wherein the belt is a baler belt.

3. The belt of claim 1, wherein the woven fabric has an elongation of less than 0.37 percent at 26 N/mm.

4. The belt of claim 1, the cords each have a tpm of less than or equal to 200 tpm.

5. The belt of claim 1, wherein the plurality of cords are dipped for adhesion to rubber.

6. The belt of claim 1, wherein the plurality of warp yarns comprise polyester.

7. The belt of claim 6, the warp yarns further comprise fiber that mitigate elongation under belt tension.

8. The belt of claim 1, the warp yarns comprise one or more materials selected from a group comprising nylons, polyesters, aramids, and other high performance polymers, including hybrids.

9. The belt of claim 1, wherein the cords have alternating S and Z twists.

10. The belt of claim 1, the plurality of warp yarns have an end count of less than 85 ends per decimeter (e/dm).

11. The belt of claim 1, wherein the fabric is incorporated into one or more of a power transmission belt, conveyor belt, air spring bellows, reinforced hose, seals, gasket and damper.

12. The belt of claim 1, wherein the plurality of cords is three or more cords.

13. The belt of claim 1, wherein the first outer layer is a cover layer.

14. The belt of claim 1, wherein the second outer layer is a pulley cover layer.

15. A method of forming a baler belt, the method comprising:
forming a first elastomeric outer layer;
forming a plurality of warp yarns into a plurality of yarn plies;
forming the plurality of yarn plies into a plurality of cords,;
weaving the plurality of cords with weft yarn to form a tension layer as a woven fabric,
wherein the woven fabric has an elongation of less than 0.37 percent elongation at 26 N/mm; and
forming a second outer layer over the tension layer.
